# EUROPÄISCHE PATENTANMELDUNG

(11) **EP 4 718 046 A1**
(43) Veröffentlichungstag der Anmeldung: **01.04.2026**
(21) Anmeldenummer: 25204525.7
(22) Anmeldetag: 25.09.2025
(51) Int. Cl.: G01L 1/18, G01L 5/24

(54) **SENSOREINHEIT UND VORRICHTUNG ZUR ÜBERWACHUNG VON VERBINDBAREN BAUTEILEN UND VERFAHREN ZUR ÜBERWACHUNG VON VERBINDBAREN BAUTEILEN**

(30) Priorität: 27.09.2024 DE 102024209463
(71) Anmelder: Technische Universität Chemnitz Körperschaft des öffentlichen Rechts, 09111 Chemnitz (DE)
(72) Erfinder: Sanli, Abdulkadir, London, W120UD (GB); Kanoun, Olfa, 09112 Chemnitz (DE); Gerlach, Carina, 09468 Geyer (DE); Ramalingame, Rajarajan, 09126 Chemnitz (DE)
(74) Vertreter: Pfenning, Meinig & Partner mbB

(57) **Zusammenfassung**

Es wird eine Sensoreinheit (4) zur Überwachung von verbindbaren Bauteilen vorgeschlagen, die eine Basiseinheit (5), eine Elektrodenschicht (6) und eine Sensorschicht (7) aufweist, wobei auf der Basiseinheit (5) die Elektrodenschicht (6) ausgebildet ist, wobei die Elektrodenschicht (6) mindestens eine Elektrode aufweist, die im elektrischen Kontakt mit der Sensorschicht (7) ausgebildet ist. Zudem ist die Sensorschicht (7) auf einer der Basiseinheit (5) abgewandten Seite der Elektrodenschicht (6) ausgebildet und die Sensorschicht (7) ist aus einem piezoresistiven Werkstoff ausgebildet, sodass durch eine mechanische Kraft eine elektrische Widerstandsänderung in der Sensorschicht (7) induzierbar ist.

## Beschreibung

Die vorliegende Erfindung betrifft eine Sensoreinheit und eine Vorrichtung zur Überwachung von verbindbaren Bauteilen sowie ein Verfahren zur Überwachung von verbindbaren Bauteilen.

Die meisten mechanischen Verbindungen im Bereich des Bauwesens und des Maschinenbaus werden durch Schraubverbindungen gelöst. Um solche Verbindungen zu sichern, wird bei der Montage ein Anzugsdrehmoment vorgegeben. Da die vorherrschende Vorspannkraft in der Regel nicht bekannt ist, wird das Anzugsdrehmoment anwendungsspezifisch mit einem definierten Sicherheitsfaktor entsprechend hoch angesetzt, um ein Lösen der Schraube zu verhindern und damit möglichen Gefahren vorzubeugen. Ungewollte dynamische Belastungen in der Anwendung können jedoch dazu führen, dass sich die Schraubverbindung lockert, was ein Sicherheitsrisiko darstellen kann. So kann es beispielsweise bei schnellen Umgebungsänderungen oder zyklischen industriellen Prozessen zu einer Lockerung der Schraube kommen. Auch durch unterschiedliche Wärmeausdehnung der verwendeten Werkstoffe zwischen Schraube und Verbindung kann ein ungewolltes Lösen der Schraube induziert werden. Darüber hinaus kann eine plötzliche Krafteinwirkung auf die Mutter, die Schraube oder die Verbindung aufgrund dynamischer Belastungen einen mechanischen Stoß verursachen, der ebenfalls zum Lösen der Schraubverbindung führt.

Daher ist es dringend erforderlich, den Zustand von Schraubverbindungen zu erkennen und zu überwachen, um ein Lösen zu verhindern. Außerdem ist die Überwachung der Schraubenspannung von großer Bedeutung für die Anwendung in Rohrleitungsnetzen und kann als sekundäres System zur Leckageerkennung an kritischen Verbindungsstellen eingesetzt werden, wenn die primäre Dichtung nicht funktioniert.

Es wurden verschiedene Techniken entwickelt, um den Zustand der Schraube zu überwachen, insbesondere das vollständige Anziehen bei überhöhtem Drehmoment in mechanischen und bautechnischen Strukturen sowie in medizinisch-dentalen Implantaten. Mechanische Lösungen beziehen sich zum Beispiel auf eine Anti-Locker-Schraubeneinheit oder einen Duplex-Gewindekörper, die in der Lage sind, eine stabile Anti-Locker-Wirkung für die Schrauben über einen langen Zeitraum zu gewährleisten. Im Hoch- und Tiefbau wird die Lockerung von Schrauben häufig durch visuelle Inspektionen von Facharbeitern oder mithilfe von Drehmomentschlüsseln und Drehmomentmessgeräten festgestellt. Alternative Lösungen, die auf der Akustik beruhen und für die Beurteilung der Dichtheit von Schrauben/Muttern verwendet werden, sind ein linearer akustischer Ansatz, der auf der Dissipation von Wellenenergie beruht, eine auf Kontaktakustik und Nichtlinearität basierende vibroakustische Modulation und die Hilbert-Huang-Transformationsmethode (HHT).

Verbesserte Technologien zur Erkennung von Schraubenlockerungen auf der Grundlage von Sensoren und Aufnehmern wie piezokeramische Aufnehmer und herkömmliche Dehnungsmessstreifen werden ebenfalls eingesetzt. Diese piezokeramischen Wandler und die Dehnungsmessstreifen sind entweder an einer Scheibe zwischen zwei vorgearbeiteten flachen Metallringen befestigt oder in die Bolzen integriert. Einige Sensoren basieren auf speziellen Techniken wie elektromechanische Impedanz, Magnetfeld und RFID (Radio-Frequency Identification)-Tags. Darüber hinaus wurden visuelle Inspektionsmethoden beschrieben, die hauptsächlich auf Bildverarbeitungstechniken beruhen. Hierbei werden Bilder von Schraubenverbindungen aufgenommen und anschließend mithilfe eines Algorithmus die Änderung der Drehwinkel bestimmt. Dies gibt Aufschluss darüber, ob und in welchem Maße sich die Schraubverbindung gelöst hat.

Andererseits wurden im Laufe der Jahre mehrere Verfahren zur Leckageerkennung mit unterschiedlichen Ansätzen und Funktionsprinzipien entwickelt. Die bestehenden Erkennungssysteme basieren auf faseroptischen Sensoren, Druckpunktanalyse, Schallemission, Infrarot-Thermografie, Unterdruckwelle, dynamischer Modellierung, Masse-Volumen-Bilanz und Bodenradar. Alle diese Technologien funktionieren je nach Betriebsumgebung, Genauigkeit und Komplexität unterschiedlich. Eine marktreife Lösung für die Schraubenüberwachung ist die Messung der durch die Schraubenvorspannkraft verursachten Umfangsvergrößerung "^{®}Boltvalid Messscheibe" der Firma Möller Metall-Dichtungen GmbH über die Widerstandsänderung eines elektrisch leitfähigen Messdrahtes. Dieser Draht ist um die Scheibe gewickelt und ändert seinen Widerstand in Abhängigkeit von dem auf die Scheibe ausgeübten Druck, der radial nach außen zunimmt und damit die Länge des Messdrahtes beeinflusst.

Eine andere Lösung zur Schraubenüberwachung basiert auf einer piezoresistiven DiaForce^{®}-Beschichtung auf Basis von amorphem Kohlenstoff, die mittels Plasma aus der Gasphase abgeschieden wird und deren Widerstandsänderung mittels RFID ausgelesen werden kann. Die letztgenannte Entwicklung hat noch keine Marktreife erlangt, da der Herstellungsprozess kostenintensiv und derzeit noch nicht für die Massenproduktion geeignet ist.

Die herkömmlichen Methoden, wie z.B. die Bestimmung der maximalen Kraft mit Drehmomentschlüsseln erfordert eine zusätzliche Kraft, um zu erkennen, ob die maximale Kraft erreicht ist. Dies könnte dazu führen, dass das ohnehin schon zu hohe Drehmoment für das Anziehen der Schraube noch weiter erhöht wird. Darüber hinaus berichten Studien, dass die uneinheitlichen Inspektionsfähigkeiten und die begrenzten Fähigkeiten der Facharbeiter/Inspektoren zu vielen Fehlern führen. Außerdem sind diese Verfahren nicht für die kontinuierliche Überwachung des Zustands der Schrauben/Muttern geeignet. Außerdem sind sowohl die RFID- als auch die akustischen Methoden teuer und erfordern einen komplexen Integrationsprozess, ein Überwachungssystem und komplizierte Algorithmen. Ebenso kann die vollständige Integration des auf Dehnungsmessstreifen basierenden Erkennungssystems in die reale Anwendung langwierig und kostenintensiv sein. Auch der Aufbau eines piezoelektrischen Aufnehmers ist aufgrund der erforderlichen zusätzlichen Komponenten für die Messung und Datenerfassung teuer in der Anwendung. Der Charme der Bildverarbeitung wird in der Regel durch die Einschränkung bei der Erkennung von Schraubenveränderungen überschattet, da ein geringer Unterschied in der Länge der Schraube in der Struktur zu falsch positiven Ergebnissen führt. Darüber hinaus variiert die Leistung der verschiedenen Technologien, die in Leckageerkennungssystemen eingesetzt werden, je nach Komplexität, Genauigkeit und Betriebsumgebung.

Darüber hinaus ist die Fehlalarmquote bei den bestehenden Systemen immer noch ein großes Problem. Die auf akustischer Emission basierenden Leckageerkennungssysteme reagieren beispielsweise empfindlich auf zufälliges Rauschen und neigen zu Fehlalarmen, die auf Glasfasern basierenden Systeme sind nicht langlebig und die Kosten für die Implementierung sind hoch, während die auf dynamischer Modellierung basierenden Systeme teuer sind und einen hohen Rechenaufwand erfordern.

Die meisten der vorhandenen Lösungen wurden entwickelt, um festzustellen, ob das erforderliche Drehmoment zum Anziehen der Schraube/Mutter-Baugruppe erreicht wurde, und nicht, um den Echtzeitstatus der Schraube zu ermitteln, der für die frühzeitige Erkennung von Schraubenlockerungen entscheidend ist. Darüber hinaus sind sie für ein bestimmtes Anwendungsszenario konzipiert, was die Skalierbarkeit und Kompatibilität mit einem breiten Spektrum an Drehmomenten und Schraubenabmessungen zu einer eminenten Herausforderung macht. Darüber hinaus kann das derzeitige System zur Erkennung von Schraubenlockerungen nur durch kostspielige Installationen, Wartung und Nachjustierung der Schrauben realisiert werden. Bisher wurde noch keine Lösung auf der Basis von Polymer/Kohlenstoff-Nanokomposit-Sensoren für die Erkennung und Überwachung von Schraubenlockerungen vorgestellt.

Beispielsweise beschreibt DE 10 2010 016 211 B4 ein Verfahren zur Überwachung von Schraubenverbindungen, wobei die Schrauben jeweils an ihren Stirnseiten gekennzeichnet und mit Messzapfen versehen werden. Dabei besteht der Messzapfen aus einer aus der Stirnfläche herausstehenden plan bearbeiteten Fläche. Diese wird zur Messung der Zustandsbestimmung der Schraubverbindung vor Ort herangezogen, wobei in Einmessung der sich hier gegenüberliegenden plan bearbeiteten Flächen exakt die vorgegebene Längenänderung mit Lehren durchgemessen oder geprüft werden kann. Dabei kann auch schon die maximal zulässige Längenänderung mithilfe von Materialzeugnis, Kennwerten und der EDV bestimmt werden. Diese Länge kann vor Ort mit einfachen Mitteln geprüft werden.

Diese Erfindung ermöglicht also eine einfache Überwachung der Schraubenverbindung, wobei eine Zustandsänderung der betroffenen Schraubenverbindung allerdings erst auffällt, wenn diese optisch durch einen Fachmann geprüft wird. Das bedeutet, eine Echtzeitüberwachung ist nur bedingt gegeben. Zudem müssen die verwendeten Schrauben mit einer sehr hohen Genauigkeit gefertigt werden, wodurch das Herstellungsverfahren erschwert wird und somit die Kosten für die Schraube erheblich steigen.

Der vorliegenden Erfindung liegt somit die Aufgabe zugrunde, eine Sensoreinheit, eine Vorrichtung sowie ein Verfahren zur Überwachung von verbindbaren Bauteilen vorzuschlagen, wobei die Sensoreinheit und die Vorrichtung leicht integrierbar und kostentengünstig herstellbar sind sowie eine präzise Echtzeitüberwachung ermöglicht wird.

Diese Aufgabe wird erfindungsgemäß gelöst durch eine Sensoreinheit nach Anspruch 1, durch eine Vorrichtung nach Anspruch 6 sowie durch ein Verfahren nach Anspruch 10. Vorteilhafte Ausgestaltungen und Weiterbildungen sind in den abhängigen Ansprüchen beschrieben.

Eine Sensoreinheit zur Überwachung von verbindbaren Bauteilen weist eine Basiseinheit, eine Elektrodenschicht und eine Sensorschicht auf, wobei auf der Basiseinheit die Elektrodenschicht ausgebildet ist. Zudem weist die Elektrodenschicht mindestens eine Elektrode auf, die im elektrischen Kontakt mit der Sensorschicht ausgebildet ist, wobei die Sensorschicht auf einer von der Basiseinheit abgewandten Seite der Elektrodenschicht ausgebildet ist. Außerdem ist die Sensorschicht aus einem piezoresistiven Werkstoff ausgebildet, sodass durch eine mechanische Kraft eine elektrische Widerstandsänderung in der Sensorschicht induzierbar ist.

Die Sensoreinheit hat den Vorteil, dass sie durch den schichtweisen Aufbau in einfacher Art und Weise sowie besonders kostengünstig gefertigt werden kann. Zudem wird durch den direkten mechanischen Kontakt zwischen den einzelnen Schichten sichergestellt, dass die elektrische Leitungslänge zwischen Elektrodenschicht und Sensorschicht minimiert wird und somit leitungsinduzierte Messungenauigkeiten reduziert werden. Zudem erlaubt es der Aufbau der Sensoreinheit als "Dünnschichtsensor" erst die relevante zu messende mechanische Kraft direkt und unmittelbar an schwer erreichbaren Stellen zu messen. Hierbei kann unter der mechanischen Kraft eine mechanische Drucckraft und bzw. oder ein mechanisches Moment, insbesondere ein Anzugsmoment einer Schraube verstanden werden. Eine mechanische Kraft kann dann unmittelbar und bzw. oder mittelbar auf die piezoelektrische Sensorschicht einwirken, wodurch eine Widerstandsänderung induziert wird, die direkt proportional zur wirkenden mechanischen Kraft ist. Somit ermöglicht es die Sensoreinheit sowohl Veränderungen der mechanischen Kraft als auch absolute Werte der wirkenden mechanischen Kräfte zu messen.

Zudem kann die Basiseinheit als eine Unterlegscheibe und bzw. oder als eine polymerbasierte Schicht, insbesondere als eine Polyimidschicht ausgebildet sein. Durch die Ausbildung der Basiseinheit auf einer herkömmlichen Unterlegscheibe kann sichergestellt werden, dass die Sensoreinheit in nahezu alle herkömmlichen Schraubverbindungen integriert werden kann. Zudem weisen herkömmliche Unterlegscheiben eine hohe Lebensdauer auf, sodass die Robustheit der Sensoreinheit erhöht wird. Auch können die Unterlegscheiben sehr günstig hergestellt werden, sodass die Herstellungskosten der Sensoreinheit reduziert werden können. Die Polyimidschicht hingegen bietet den Vorteil, dass das Polyimid eine hohe Dauereinsatztemperatur, eine geringe Wärmeausdehnung und hohe Witterungsbeständigkeit aufweist, sodass sie sich diese Ausführungsvariante besonders in widrigen Umgebungsbedingungen auszeichnet. Es ist auch möglich, dass die Polyimidschicht auf der Unterlegscheibe ausgebildet wird und somit die Basiseinheit aus Unterlegscheibe und Polyimidschicht ausgebildet ist. Alternativ und bzw. oder zusätzlich kann die polymerbasierte Schicht beispielsweise Polyethylenterephthalat (PET) und bzw. oder andere Polymere umfassen.

Außerdem kann ein piezoresistiver Sensor, insbesondere als Kreisring auf einer von der Elektrodenschicht abgewandten Seite der Sensorschicht ausgebildet sein. Unter der Ausbildung als Kreisring werden alle kreisringförmigen Ausbildungen verstanden. Durch die zusätzliche Integration eines piezoresistiven Sensors kann neben der Überwachung der mechanischen Kräfte auch eine kontinuierliche Überwachung des Austretens eines Fluids, welches beispielsweise innerhalb der verbindbaren Bauteile geführt werden kann, realisiert werden. Auch wird durch die Ausbildung des piezoresistiven Sensors als Kreisring die Abdichtung der Sensoreinheit gegenüber der Umgebung verbessert.

Weiterhin kann eine Schutzschicht auf einer von der Elektrodenschicht abgewandten Seite der Sensorschicht ausgebildet sein, um die Sensorschicht zu schützen. Durch die Ausbildung einer Schutzschicht wird die Robustheit der Sensoreinheit und somit die Zuverlässigkeit und die Langlebigkeit erhöht.

Zudem kann der piezoresistive Werkstoff ein Kohlenstoff-Nanoröhren-Polymer-Nanokomposit, insbesondere ein Kohlenstoff-Nanoröhren-Epoxid-Nanokomposit umfassen. Kohlenstoff-Nanoröhren-Polymer-Nanokomposite haben den Vorteil, dass diese sehr empfindlich auf sich ändernde mechanische Kräfte reagieren. Somit kann in erster Linie die Sensibilität der Sensoreinheit erhöht werden. Zusätzlich ist es möglich, die Empfindlichkeit der Nanokomposite durch eine Veränderung der Füllstoffkonzentration von Kohlenstoff-Nanoröhren oder durch die Wahl des Polymers zu verändern. Das bedeutet, die Sensoreinheit kann über eine geeignete Wahl des Polymers und bzw. oder über die Variation der Konzentration der Kohlenstoff-Nanoröhren an den speziellen Anwendungsfall optimal angepasst werden.

Eine Vorrichtung zur Überwachung von verbindbaren Bauteilen weist mindestens ein Verbindungselement, über das mindestens ein erstes Bauteil mit mindestens einem zweiten Bauteil kraftschlüssig verbunden oder verbindbar ist, auf. Zudem ist die Sensoreinheit, die in das Verbindungselement integriert ist und bzw. oder zwischen dem ersten Bauteil und dem Verbindungselement angeordnet oder anordenbar. Weiterhin weist die Vorrichtung eine Messanordnung zur Verarbeitung und Wandlung der elektrischen Widerstandsänderung, eine Übertragungseinheit zur Übertragung der Signale an eine Empfangseinheit und eine elektrische Versorgungseinheit auf, die dazu ausgebildet ist, die elektrische Energie zum Betrieb der Vorrichtung bereitzustellen. Hierbei bilden die Messanordnung, die Übertragungseinheit sowie die elektrische Versorgungseinheit ein System aus, das steckbar mit dem Verbindungselement ausgebildet ist.

Durch diese Vorrichtung kann in Echtzeit und kontinuierlich die Verbindung der verbindbaren Bauteile überwacht werden. Zugleich ist die Vorrichtung aufgrund der Versorgungseinheit unabhängig von einer externen elektrischen Versorgung und kann somit über einen Zeitraum von mindestens 6 - 8 Monaten kontinuierlich betrieben werden. Die Übertragungseinheit übermittelt die in Echtzeit gemessenen mechanischen Kräfte an die Empfangseinheit, sodass Veränderung, d.h. beispielsweise das Lösen/Lockern der Verbindung schnell und präzise detektiert werden können.

Außerdem kann unterhalb der Basiseinheit und bzw. oder oberhalb der Sensorschicht mindestens eine Beabstandungseinheit, insbesondere je eine Unterlegscheibe ausgebildet sein. In diesem Fall bedeutet "unterhalb" auf der von der Elektrodenschicht abgewandten Seite der Basiseinheit. Analog bedeutet "oberhalb" auf der von der Elektrodenschicht abgewandten Seite der Sensorschicht. Durch die zusätzlichen Unterlegscheiben kann die Robustheit der Vorrichtung gegen mechanische Stöße verbessert werden und somit die in der Vorrichtung vorgesehen Sensoreinheit besser geschützt werden.

Weiterhin kann die Messanordnung eine Schnittstelleneinheit zur Messung der elektrischen Widerstandsänderung und eine Wandlereinheit zur Wandlung der elektrischen Widerstandsänderung in elektrische Signale umfassen. Durch eine analoge Schnittstelleneinheit wird eine alternative Übertragungsmöglichkeit geschaffen, sodass zu jedem Zeitpunkt zusätzliche Messpunkte aufgenommen werden können.

Zudem kann das Verbindungselement als Schraube ausgebildet sein. Dadurch kann die Vorrichtung in die am häufigsten angewendete Lösung zur Ausbildung lösbarer Verbindungen von Bauteilen integriert werden. Somit kann der Einsatzbereich der Vorrichtung maßgeblich erweitert werden.

Bei einem Verfahren zur Überwachung von verbindbaren Bauteilen verbindet mindestens ein Verbindungselement mindestens ein erstes Bauteil mit mindestens einem zweiten Bauteil kraftschlüssig miteinander, wobei eine Sensoreinheit in das Verbindungselement integriert wird und bzw. oder zwischen dem ersten Bauteil und dem Verbindungselement ausgebildet wird. Hierbei weist die Sensoreinheit eine Basiseinheit auf, auf der eine Elektrodenschicht ausgebildet ist, wobei die Elektrodenschicht mindestens eine Elektrode aufweist, die elektrisch mit einer Sensorschicht verbunden ist, wobei die Sensorschicht auf einer der Basiseinheit abgewandten Seite der Elektrodenschicht ausgebildet ist. Zudem ist die Sensorschicht aus einem piezoresistiven Werkstoff ausgebildet, sodass eine mechanische Kraft eine elektrische Widerstandsänderung in der Sensorschicht induziert und anschließend eine Messanordnung die elektrische Widerstandsänderung verarbeitet und in elektrische Signale wandelt. Anschließend werden die Signale von einer Übertragungseinheit an eine Empfangseinheit übertragen, wobei eine elektrische Versorgungseinheit, die die elektrische Energie zum Betrieb der Übertragungseinheit und der Sensoreinheit bereitstellt, vorgesehen ist. Weiterhin bilden die Messanordnung, die Übertragungseinheit sowie die elektrische Versorgungseinheit ein System aus, das über eine Steckverbindung mit dem Verbindungselement verbunden wird.

Durch dieses Verfahren wird eine Echtzeitüberwachung der Verbindung von den verbundenen Bauteilen möglich. Zudem ist eine sehr präzise Messung möglich, sodass kleinste Veränderungen detektiert werden können, wodurch es möglich wird, frühzeitig auf eventuelle Schäden bzw. sich lockernde Verbindungen zu reagieren.

Das beschriebene Verfahren ist dazu ausgebildet, mit der beschriebenen Sensoreinheit bzw. der beschriebenen Vorrichtung durchgeführt zu werden, d.h. die Sensoreinheit bzw. die Vorrichtung sind geeignet, das beschriebene Verfahren durchzuführen.

Ausführungsbeispiele der Erfindung sind in den Zeichnungen dargestellt und werden nachfolgend anhand der Figuren 1 - 3 beschrieben. Wiederkehrendende Merkmale sind mit identischen Bezugszeichen versehen.

Es zeigen:
Fig. 1 eine schematische Draufsicht auf eine Basiseinheit, eine Elektrodenschicht, eine Sensorschicht sowie einen piezoresistiven Sensor;
Fig. 2 eine schematische perspektivische Explosionsdarstellung eines Verbindungselements mit einer Sensoreinheit und
Fig. 3 eine schematische frontale Ansicht einer Vorrichtung zur Überwachung von verbindbaren Bauteilen im verbundenen Zustand.

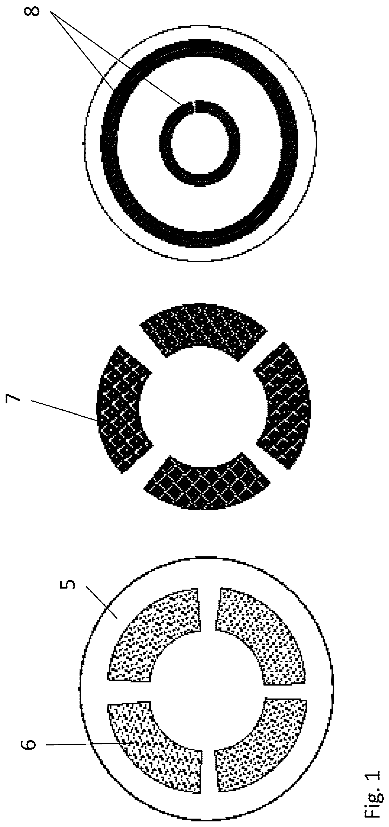

In Fig. 1 sind die Einzelteile einer Sensoreinheit 4 nebeneinander dargestellt. In dieser Ausführungsvariante umfasst die Sensoreinheit 4 eine Basiseinheit 5, auf der eine Elektrodenschicht 6 aufgebracht ist. Die Elektrodenschicht 6 umfasst hierbei vier Elektroden, die als vier Kreissegmente um eine mittig angeordnete Achse der Basiseinheit 5 angeordnet sind. Alternativ können auch lediglich nur eine Elektrode oder auch mehr als vier Elektroden vorgesehen sein. Die Basiseinheit 5 ist in diesem Ausführungsbeispiel kreisförmig und als herkömmliche Unterlegscheibe ausgebildet. Alternative kann die Basiseinheit 5 auch aus einer Polymerschicht, beispielsweise aus Polyimid, PET oder anderen Kunststoffen ausgebildet sein. Der Einsatz einer Polyimidschicht bietet sich insbesondere dann an, wenn die Sensoreinheit 4 unter widrigen Umgebungsbedingungen (hohe Temperaturen, reaktives Umgebungsmedium, etc.) eingesetzt werden soll.

Auf der Elektrodenschicht 6 ist eine Sensorschicht 7 aufgebracht, welche analog zu den vier Elektroden vier Sensorelemente aufweist. Unter den Sensorelementen werden vier voneinander getrennte Bereiche der Sensorschicht 7 verstanden, die elektrisch voneinander isoliert sind. Eine elektrische Verbindung zwischen den Sensorelementen wird erst über mindestens eine Elektrode auf der Elektrodenschicht 6 hergestellt. In diesem Ausführungsbeispiel stimmt die Anzahl der Sensorelemente mit der Anzahl der Elektroden überein. Die Sensorelemente bzw. die Sensorschicht 7 ist hierbei aus einem Kohlenstoff-Nanoröhren-Epoxid-Nanokomposit ausgebildet.

Hierbei können neben Kohlenstoffnanoröhren-Epoxid-Nanokompositen eine Vielzahl von Werkstoffen für die Sensorschicht 7 verwendet werden, darunter Graphen, leitfähige Polymere, Metallnanopartikel, piezoelektrische Materialien, Quanten-Tunnel-Komposite (QTC) und Silikonkautschuk mit leitfähigen Füllstoffen. Die Dicke des resultierenden Schichtstapels, also in diesem Ausführungsbeispiel die Summe der Dicken der Sensorschicht 7 und der Elektrodenschicht 6, kann in einem Bereich von 50 nm - 200 µm liegen. Zudem hängt die Dicke des Schichtstapels von Faktoren wie den gewählten Werkstoffen, ihren Dicken und der angewandten Herstellungsmethode ab und liegt bevorzugt zwischen einigen zehn und mehreren hundert Mikrometern. Verfahren wie die Dünnschichtabscheidung können hierbei aber auch dünnere Schichten im Bereich von Nanometern bis Mikrometern ergeben, während Verbundwerkstoffe oder andere Schichtherstellungsverfahren zu dickeren Schichtstapeln im Millimeterbereich führen können.

Das Nanokomposit kann eine Füllstoffkonzentration von Kohlenstoffnanoröhren in einem Bereich von 0,05 Gew.-% bis 5 Gew.-% aufweisen. Über die Einstellung der Füllstoffkonzentration kann die Empfindlichkeit der Sensorschicht 7 gegenüber der wirkenden mechanischen Druckkraft erhöht werden. Dies ermöglicht es, sehr präzise Veränderungen in der mechanischen Druckkraft zu detektieren. Die Höhe der Füllstoffkonzentration beeinflusst dabei sowohl das mechanische als auch das elektrische Verhalten des Komposits.

In dieser Ausführungsvariante umfasst das Nanokomposit katalytische CVD-MWCNTs (Chemical Vapour Deposition - Multi-walled carbon nanotubes) mit einer Reinheit von > 95 %, einem Außendurchmesser von 6 nm bis 9 nm und einer Länge von < 1 µm. Diese MWCNTs werden ohne weitere chemische Behandlung direkt mit dem Epoxidharz vermischt. Die Mischung wird 30 Minuten lang mit einer Ultraschallsonotrode bei 30 W und 25 °C mechanisch dispergiert und anschließend 2 Stunden lang bei 400 U/min magnetisch gerührt. Anschließend wird ein Härter im Volumenverhältnis 100:5 zugegeben und 10 Minuten lang bei 400 U/min gemischt. Schließlich werden die Proben in einer Vakuumkammer bei 120 mbar für 30 min entgast, um Wasser zu entfernen.

In diesem Ausführungsbeispiel wird die Sensorschicht 7 auf die Elektrodenschicht 6 gedruckt. Alternativ kann die Sensorschicht 7 auch mittels physikalischer Gasphasenabscheidung aufgebracht werden.

Neben dem Druck und der physikalischen Gasphasenabscheidung sind verschiedene Verfahren zum Aufbau des Schichtsystems von Nanokompositen denkbar. Dazu gehören die Sprühbeschichtung (eng. spray Coating), die Schleuderbeschichtung (eng. spin Coating), die Tauchbeschichtung (eng. dip Coating), die Rolle-zu-Rolle-Beschichtung (eng. roll-to-roll coating), der Tintenstrahldruck (eng. inkjet printing), der Siebdruck (eng. screen printing), Schablonendruck (eng. stencil printing), das Gießen in eine Form, die Langmuir-Blodgett-Technik, die Rakelbeschichtung (eng. doctor blade coating), die Sprühpyrolyse (eng. spray pyrolysis), die chemische Gasphasenabscheidung (CVD) (eng. chemical vapor deposition) und die elektrophoretische Abscheidung (eng. electrophoretic deposition). Bei der Sprühbeschichtung wird die Nanokompositlösung auf das Substrat gesprüht, während bei der Schleuderbeschichtung eine gleichmäßige Abscheidung durch schnelles Schleudern erreicht wird. Bei der Tauchbeschichtung wird das Substrat in die Lösung eingetaucht, und die Rolle-zu-Rolle-Beschichtung erleichtert die Produktion in großem Maßstab. Der Tintenstrahldruck ermöglicht eine präzise Strukturierung, während die Langmuir-Blodgett-Technik einen kontrollierten Monolayer-Transfer ermöglicht. Bei der Rakelbeschichtung wird die Lösung mit einer Klinge verteilt, und bei der Sprühpyrolyse erfolgt eine Zerstäubung und Pyrolyse. Bei der CVD-Beschichtung werden dünne Schichten mit Hilfe von Vorläufergasen abgeschieden, und bei der elektrophoretischen Abscheidung werden elektrische Felder zur präzisen Steuerung eingesetzt.

Zusätzlich wird auf die Sensorschicht 7 ein weiterer piezoresistiver Sensor 8 kreisförmig aufgebracht, sodass die Sensorelemente gegenüber Umwelteinflüssen eine verbesserte Abdichtung aufweisen.

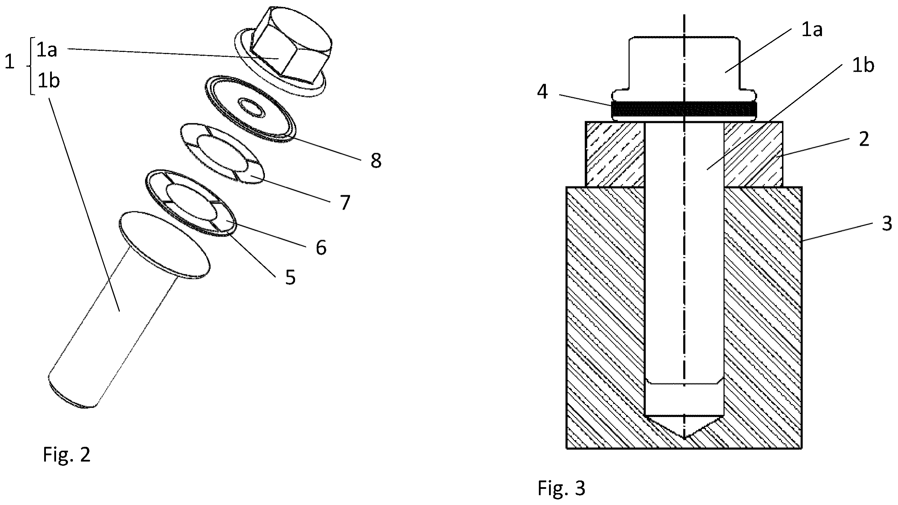

Fig. 2 zeigt ein Verbindungselement 1, welches aus einem ersten Teil 1a und einem zweiten Teil 1b ausgebildet ist, wobei zwischen dem ersten Teil 1a und dem zweiten Teil 1b die eben beschriebenen Einheiten der Sensoreinheit 4 in einer Explosionsansicht dargestellt sind. Fig. 3 stellt dementsprechend das in Fig. 2 gezeigte zusammengebaute Verbindungselement 1 dar, wobei dieses ein erstes Bauteil 2 und ein zweites Bauteil 3 kraftschlüssig miteinander verbindet. In diesem Ausführungsbeispiel ist das Verbindungselement 1 als Schraube ausgebildet. Alternativ kann das Verbindungselement 1 aber auch als Niete oder Nagel ausgebildet sein. Neben Schrauben, Nieten und Nägeln sind als Verbindungselemente 1 auch Bolzen, Stifte, Klammern, Klemmen, Haken, Klebeverbindungen, Lötstellen, Schweißpunkte, Schnappverschlüsse, Gewindestangen und Verriegelungsmechanismen denkbar. Diese Elemente bieten verschiedene Möglichkeiten, die Sensoreinheit 4 zu befestigen und mit Druck zu beaufschlagen, was Flexibilität für verschiedene Anwendungen und Montageanforderungen bietet.

In diesem Ausführungsbeispiel umfasst die Erfindung also eine dünne piezoresistive Schicht (Sensorschicht 7) auf der Grundlage einer auf eine Unterlegscheibe (Basiseinheit 5) aufgedruckten Kohlenstoff-Nanoröhren-Polymer-Nanokomposit-Schicht. Durch Veränderung des Anzugsmoments der Schraube (Verbindungselement 1) ändert sich der Widerstand der Sensorschicht 7, der bei einer konstanten Vorspannkraft konstant bleibt. Wird die Schraube gelockert, ändert sich die Kraft, die durch die Schraubenspannung auf die Sensorschicht 7 ausgeübt wird, wodurch sich der elektrische Widerstand der Sensorschicht 7 ändert. Die Sensorschicht 7 kann auf eine handelsübliche Unterlegscheibe oder auf eine dünne Folienschicht, beispielsweise auf eine Polyimidschicht gedruckt werden, die die Funktion der Unterlegscheibe nicht beeinträchtigt. Das bedeutet, die Polyimidschicht ist auf der Unterlegscheibe in direktem mechanischem Kontakt ausgebildet. Auf der Polyimidschicht wiederum ist die Elektrodenschicht 6 und auf der Elektrodenschicht 6 die Sensorschicht 7 gedruckt. Die Sensorschicht 7 umfasst die eben beschriebenen vier Sensorelemente, um die Kraftverteilung über die Oberfläche der Unterlegscheibe zu messen, die von der Schraube beim Anziehen ausgeübt wird.

Diese Kraftverteilung liefert auch zusätzliche Informationen, nämlich die Ausrichtung der Schraube auf der Sensoreinheit 4. Die Sensorschicht 7 kann zusätzlich mit einer Schutzschicht ummantelt sein, um physische Schäden durch Reibungskräfte und den Einfluss von Feuchtigkeit in rauen Umgebungen zu verhindern. Ein weiterer Schutz wird dadurch erreicht, dass die Sensoreinheit 4 zwischen zwei handelsübliche Unterlegscheiben gelegt wird.

Das bedeutet, die Sensoreinheit 4 bzw. die Vorrichtung ist ein mehrschichtiges System mit spezifischen Funktionen, das so konstruiert ist, dass es ein integriertes Plug-and-Play-Modul für eine einfache Installation und Überwachung darstellt. Die unterste Schicht besteht wie bereits ausgeführt aus einer Elektrodenschicht 6, die den elektrischen Kontakt zur empfindlichen Sensorschicht 7 herstellt. Eine weitere optionale Schicht, die vor allem bei Anwendungen mit Flüssigkeiten von Vorteil ist, umfasst einen piezoresistiven Sensor 8, der als Kreisring angeordnet ist und zur Verbesserung der Abdichtung und zur kontinuierlichen Überwachung des Austretens von Flüssigkeiten im Falle einer Lockerung der Schraube, der Alterung oder unerwünschter Stöße dient. Die Elektrodenschicht 6, die Sensorschicht 7 und der piezoresistive Sensor 8 sind dabei in der Regel koaxial um die Drehachse angeordnet.

Die Messschaltung, die in den Figuren nicht dargestellt ist, umfasst eine analoge Schnittstelleneinheit, die auf einer Vollbrückenschaltung zur Messung des Widerstands der Messfühler basiert, einen Mikrocontroller mit extrem niedrigem Stromverbrauch, der mit einem Multiplex-Analog-Digital-Wandler ausgestattet ist, sowie ein Modul zur drahtgebundenen/drahtlosen Daten-/Signalübertragung. Das gesamte System ist so dimensioniert, dass es als Steckmodul über den Kopf des Bolzens bzw. der Schraube, also das erste Teil 1a des Verbindungselements 1, passt. Das System wird von einer kleinen Knopfzelle, also einer Energieversorgungseinheit (nicht dargestellt) gespeist, die im Falle eines drahtlosen Moduls mindestens 6 Monate lang Strom liefern kann, während die Lebensdauer des kabelgebundenen Moduls mindestens doppelt so lang ist.

Vorteile der Erfindung ergeben sich aus der kostengünstigen Herstellung der Sensoreinheit 4, die durch massenproduktionstaugliche Druckverfahren ermöglicht wird. Die dünne piezoresistive Sensorschicht 7 kann leicht integriert werden, ohne die Eigenschaften der handelsüblichen Unterlegscheiben zu verändern. Dies bedeutet, dass die vorgeschlagene Erfindung an jede bestehende Unterlegscheibe angepasst werden kann. Darüber hinaus kann die Zusammensetzung des Nanokomposits auch durch Änderung der Konzentration des Nanofüllstoffs oder Variation des Polymers eingestellt werden, wodurch Sensorelemente mit anpassbarer Leistung möglich sind, insbesondere die wesentlichen Parameter wie Empfindlichkeit und Erfassungsbereich. Dies ermöglicht eine breite Anwendung für die Zustandsüberwachung von Schraubverbindungen.

Somit ermöglicht die Erfindung eine Echtzeitüberwachung des Drehmoments, das zur Befestigung der Schraube/Mutter während der Montage aufgebracht wird. Auch die Abweichung der in der Schraube/Mutter-Montage ausgeübten Kraft kann überwacht werden. Eine geringfügige Kraftabweichung in der Größenordnung von wenigen mN, die durch eine Drehung von weniger als 1° oder einen Weg von 5 nm bis 10 nm in beiden Richtungen verursacht werden kann, lässt sich mit einer Reaktionszeit von weniger als 500 µs leicht erkennen/überwachen.

Die Fähigkeit, die Kraft in beide Richtungen zu überwachen, kann sowohl Informationen über die Lockerung der Schraube liefern, wenn die Kraft abnimmt, als auch über den Anstieg der Kraft beim Anziehen der Schraube oder bei plötzlichen Stößen auf die Schraube/Mutter-Baugruppe verursacht wird. Weiterhin können Leckagen in Pipelines erkannt werden. Pipelines werden häufig für den Transport verschiedener Flüssigkeiten und Gase über Tausende von Kilometern auf der ganzen Welt eingesetzt. Die vorgeschlagene Erfindung bietet somit, wenn die Bauteile der Pipelines mit der vorgeschlagenen Vorrichtung verbunden werden, eine alternative und effiziente Methode zur Leckerkennung an den Verbindungsstellen von Pipelines.

## Patentansprüche

1. Sensoreinheit (4) zur Überwachung von verbindbaren Bauteilen, aufweisend:
eine Basiseinheit (5), eine Elektrodenschicht (6) und eine Sensorschicht (7), wobei
auf der Basiseinheit (5) die Elektrodenschicht (6) ausgebildet ist, wobei
die Elektrodenschicht (6) mindestens eine Elektrode aufweist, die im elektrischen Kontakt mit der Sensorschicht (7) ausgebildet ist, wobei
die Sensorschicht (7) auf einer der Basiseinheit (5) abgewandten Seite der Elektrodenschicht (6) ausgebildet ist, und wobei
die Sensorschicht (7) aus einem piezoresistiven Werkstoff ausgebildet ist, sodass durch eine mechanische Kraft eine elektrische Widerstandsänderung in der Sensorschicht (7) induzierbar ist.

2. Sensoreinheit (4) zur Überwachung von verbindbaren Bauteilen nach Anspruch 2, **dadurch gekennzeichnet, dass** die Basiseinheit (5) als eine Unterlegscheibe und/oder als eine polymerbasierte Schicht, insbesondere als eine Polyimidschicht ausgebildet ist.

3. Sensoreinheit (4) zur Überwachung von verbindbaren Bauteilen nach einem der vorherigen Ansprüche, **dadurch gekennzeichnet, dass** ein piezoresistiver Sensor (8), insbesondere als Kreisring, auf einer der Elektrodenschicht (6) abgewandten Seite der Sensorschicht (7) ausgebildet ist.

4. Sensoreinheit (4) zur Überwachung von verbindbaren Bauteilen nach einem der vorherigen Ansprüche, **dadurch gekennzeichnet, dass** eine Schutzschicht auf einer der Elektrodenschicht (6) abgewandten Seite der Sensorschicht (7) ausgebildet ist, um die Sensorschicht (7) zu schützen.

5. Sensoreinheit (4) zur Überwachung von verbindbaren Bauteilen nach einem der vorherigen Ansprüche, **dadurch gekennzeichnet, dass** der piezoresistive Werkstoff ein Kohlenstoff-Nanoröhren-Polymer-Nanokomposit, insbesondere ein Kohlenstoff-Nanoröhren-Epoxid-Nanokomposit umfasst.

6. Vorrichtung zur Überwachung von verbindbaren Bauteilen mit einer Sensoreinheit (4) nach einem der Ansprüche 1 - 5, aufweisend:
mindestens ein Verbindungselement (1), über das mindestens ein erstes Bauteil (2) mit mindestens einem zweiten Bauteil (3) kraftschlüssig verbunden oder verbindbar ist,
die Sensoreinheit (4), die in das Verbindungselement (1) integriert ist und/oder zwischen dem ersten Bauteil (2) und dem Verbindungselement (1) angeordnet oder anordenbar ist,
eine Messanordnung zur Verarbeitung und Wandlung der elektrischen Widerstandsänderung,
eine Übertragungseinheit zur Übertragung der Signale an eine Empfangseinheit und
eine elektrische Versorgungseinheit, die dazu ausgebildet, die elektrische Energie zum Betrieb der Vorrichtung bereitstellt, wobei
die Messanordnung, die Übertragungseinheit sowie die elektrische Versorgungseinheit ein System ausbilden, dass steckbar mit dem Verbindungselement (1) ausgebildet ist.

7. Vorrichtung zur Überwachung von verbindbaren Bauteilen nach Anspruch 6, **dadurch gekennzeichnet, dass** unterhalb der Basiseinheit (5) und/oder oberhalb der Sensorschicht (7) mindestens eine Beabstandungseinheit, insbesondere je eine Unterlegscheibe ausgebildet ist.

8. Vorrichtung zur Überwachung von verbindbaren Bauteilen nach einem der Ansprüche 6 - 7, **dadurch gekennzeichnet, dass** die Messanordnung eine Schnittstelleneinheit zur Messung der elektrischen Widerstandsänderung und eine Wandlereinheit zur Wandlung der elektrischen Widerstandsänderung in elektrische Signale umfasst.

9. Vorrichtung zur Überwachung von verbindbaren Bauteilen nach einem der Ansprüche 6 - 8, **dadurch gekennzeichnet, dass** das Verbindungselement (1) als Schraube ausgebildet ist.

10. Verfahren zur Überwachung von verbindbaren Bauteilen, bei dem
mindestens ein Verbindungselement (1) mindestens ein erstes Bauteil (2) mit mindestens einem zweiten Bauteil (3) kraftschlüssig verbindet, wobei
eine Sensoreinheit (4) in das Verbindungselement (1) integriert wird und/oder zwischen dem ersten Bauteil (2) und dem Verbindungselement (1) ausgebildet wird, wobei
die Sensoreinheit (4) eine Basiseinheit (5) aufweist, auf der eine Elektrodenschicht (6) ausgebildet ist, wobei
die Elektrodenschicht (6) mindestens eine Elektrode aufweist, die elektrisch mit einer Sensorschicht (7) verbunden ist, wobei
die Sensorschicht (7) auf einer der Basiseinheit (5) abgewandten Seite der Elektrodenschicht (6) ausgebildet ist, und wobei
die Sensorschicht (7) aus einem piezoresistiven Werkstoff ausgebildet ist, sodass eine mechanische Kraft eine elektrische Widerstandsänderung in der Sensorschicht (7) induziert und anschließend eine Messanordnung die elektrische Widerstandsänderung verarbeitet und in elektrische Signale wandelt und anschließend
die Signale von einer Übertragungseinheit an eine Empfangseinheit übertragen werden, wobei
eine elektrische Versorgungseinheit, die die elektrische Energie zum Betrieb der Übertragungseinheit und der Sensoreinheit (4) bereitstellt, wobei
die Messanordnung, die Übertragungseinheit sowie die elektrische Versorgungseinheit ein System ausbilden, das über eine Steckverbindung mit dem Verbindungselement (1) verbunden wird.
